# EUROPEAN PATENT APPLICATION

(11) **EP 3 363 632 A1**
(43) Date of publication of application: **22.08.2018**
(21) Application number: 18157453.4
(22) Date of filing: 19.02.2018
(51) Int. Cl.: B32B 27/40, C08K 3/04, C08L 75/04

(54) **POLYURETHANE MEMBRANE COMPRISING GRAPHENE AND FABRICS COMPRISING SAID MEMBRANE**

(30) Priority: 20.02.2017 IT 201700018514
(71) Applicant: Consult S.A.S. di Gaspari Elisabetta & C., 37135 Verona VR (IT)
(72) Inventor: Gaspari, Elisabetta, 37122 VERONA (IT)
(74) Representative: Serravalle, Marco

(57) **Abstract**

The present invention is directed to a mono-layer membrane comprising a polyurethane in quantity comprise between 85 and 95% in weight and graphene in quantity comprise between 5 and 15% in weight.

The invention is also directed to a process for the preparation of said mono-layer membrane, said process comprising the following steps:
a. preparation of a dispersion comprising the following ingredients:
i. from 70 to 85 % in weight of a polyurethane
ii. from 20 to 24% in weight of a solvent
iii. from 4 to 12% in weight of graphene;

b. lay the dispersion on siliconized paper;
c. Heat the dispersion laid on the siliconized paper in a furnace at a temperature comprised between 80 and 160° and a period comprised between 2 and 5 minutes.

The membrane according to the invention is conveniently used for the preparation of multi-layer fabrics, particularly fabrics for the realization of clothing to use at particularly low temperature. Examples of those clothes are technical clothing for winter sports, working clothes and shoes, e.g. for cold stores.

## Description

**.** The present invention is directed to a polyurethane membrane comprising graphene and to a fabric comprising said membrane.

**.** More specifically, the invention related to fabrics for the realization of clothes to be used at particularly low temperature. Examples of those clothes are technical clothing for winter sports, working clothes and shoes, e.g. for cold stores.

**.** US 2008/0083721 discloses a composite heating element comprising a first and a second dielectric layer and a conductive layer placed between the first and the second dielectric. The conductive layer comprises a conductive ink. Graphite particles are also present amongst materials specified to give conductive proprieties to ink. The material is used for winter sports clothing.

**.** The present invention is directed to a polyurethane membrane having conductive capacity and containing graphene. Particularly, the membrane according to the invention contains from 85 to 95% in weight of polyurethane and from 5 to 15% in weight of graphene. The membrane can also contain other additives such for example, pigments, for which the sum of percentage of graphene and polyurethane can also be lower than 100. The membrane is conveniently used in the preparation of technical fabrics suitable to be used at very low temperatures. Particularly, the membrane can be used in combination with a power supply, to heat a cloth thanks to the electrical conductivity of graphene.

**.** The membrane according to the invention can be prepared through the following process: polyurethane is mixed in a suitable solvent, for example, toluene, dimethylformamide (DMF) or methyl ethyl ketone (MEK). A defined quantity of graphene is dispersed into the mixture; the dispersion is evenly distributed on siliconized paper; then the siliconized paper is passed in a furnace with increasing and variable temperature between 80 and 160 °C for a period preferably comprised between 1 and 10 minutes, more preferably between 2 and 5 minutes. Once the membrane becomes solid, it is coiled on a coil.

**.** When preparing the graphene and polyurethane dispersion, an amount of solvent comprised between 8 and 46 % by weight is used, preferably between 10 and 24 % by weight, an amount of polyurethane comprised between 50 and 85 % by weigh, preferably between 70 and 85 % by weight, and graphene in an amount comprised between 4 and 12 % by weight, preferably between 6 and 9 % by weight.

**.** The membrane obtained therefore has a thickness preferably comprised between 15 and 80 µm, preferably between 20 and 60 µm, even more preferably between 30 and 50 µm, and a weight per surface unit preferably comprised between 20 and 90 g/m², more preferably comprised between 25 and 80 g/m², even more preferably comprised between 30 and 70 g/m².

**.** Once obtained, the membrane according to the invention can be coupled to various types of fabric, i.e. polyester, polyamide, cotton, wool, elastane, polypropylene, acrylic. The coupling between membrane and fabric can take place according to one of the technics known in the art, i.e. using a polyurethane glue, possibly containing various types of additives, such as, for example, pigments.

### Example

**.** A monolayer membrane comprising graphene has been prepared according to the following procedure:

**.** A dispersion containing 7.5 % graphene, 80% polyurethane and 12.5% toluene was prepared. The dispersion was laid on siliconized paper through laboratory tool equipped with a blade allowing a thin hand-laying of the polyurethane-based dispersion. The siliconized paper on which the dispersion was laid, was put in a furnace at increasing temperature from a starting value of 80°C to a final one of 160°C, for a total period of about 3 minutes. Then, the membrane was left to dry in air until a dry product is obtained.

**.** The membrane obtained therefore can be connected, through suitable electrical connecting systems known in the art, to a generator that, by applying a potential of a few volts, heats the membrane.

## Claims

1. Monolayer membrane comprising:
a. a polyurethane in an amount comprised between 85 and 95% by weight;
b. graphene in an amount comprised between 5 and 15% by weight.

2. Monolayer membrane according to claim 1 wherein graphene is present in an amount comprised between 6 and 9% by weight.

3. Membrane according to claims 1 or 2, wherein the thickness of the membrane is comprised between 15 and 80 µm.

4. Membrane according to claim 3, wherein the thickness of the membrane is comprised between 20 and 70 µm.

5. Membrane according to claims 1-3, wherein the weight per surface unit of membrane is comprised between 20 and 90 g/m²

6. Membrane according to claim 5, wherein the weight of the membrane per surface unit is comprised between 30 e 70 g/m²

7. Process for the preparation of monolayer membrane according to claims 1-6, said process comprising the following steps:
a. preparing a dispersion of the following ingredients:
i. from 70 to 85 % by weight of a polyurethane;
ii. from 10 to 24% by weight of a solvent;
iii. from 4 to 12% by weight of a graphene;
b. laying the dispersion on silicon paper;
c. heating the dispersion laid on silicon paper in an oven at a temperature comprised between 80 and 160° for a time comprised between 2 and 5 minutes.

8. Process according to claim 7, wherein the solvent is selected from toluene, dimethylformamide, and methylethylketone.

9. Multilayer fabric comprising, as an internal layer, the membrane according to claims 1-6.

10. Multilayer fabric according to claim 9, wherein the external layers are selected from the following fabrics: polyester, polyamide, cotton, wool, elastane, polypropylene, acrylic.
